# DEMANDE DE BREVET EUROPEEN

(11) **EP 4 148 701 A1**
(43) Date de publication de la demande: **15.03.2023**
(21) Numéro de dépôt: 22194859.9
(22) Date de dépôt: 09.09.2022
(51) Int. Cl.: G08G 1/01, G06V 20/58, G08G 1/04, G08G 1/14, G06N 3/04, G06N 3/08

(54) **DISPOSITIF AUTONOME ET PROCEDE POUR DETECTER SI DES EMPLACEMENTS SONT OCCUPES OU NON**

(30) Priorité: 10.09.2021 FR 2109538
(71) Demandeur: Cocoparks, 94306 Vincennes cedex (FR)
(72) Inventeur: JATTEAU, RAPHAEL, 75011 PARIS (FR); ISORNA, ALBERTO, 75004 PARIS (FR)
(74) Mandataire: Cabinet Beau de Loménie

(57) **Abrégé**

Ce dispositif autonome (10) détermine si un emplacement (EMPᵢ) est occupé ou non.

Il comporte un module (CAM) d'acquisition d'image (IMG) couvrant une zone géographique (ZG) qui comporte cet emplacement.

Un module (MPI) de prétraitement d'image peut être utilisé.

Un réseau de neurones (NN) analyse l'image pour déterminer une information binaire (IBᵢ, IBCᵢ), représentative de l'occupation ou de la non occupation dudit au moins un emplacement (EMPi)

Un module (COM) d'envoi cette information binaire (IBᵢ, IBCᵢ) à un serveur distant (SRV).

Un contrôleur de gestion d'énergie (CTR1, CTR2) est configuré pour contrôler au moins une opération (OPₖ) d'au moins un de ces modules.

## Description

### Arrière-plan de l'invention

L'invention se situe dans le domaine de l'électronique. Elle concerne plus précisément un dispositif configuré pour acquérir des images et déterminer si des emplacements détectés dans ces images sont occupés ou non.

L'invention peut être utilisée en particulier, et ce de façon non limitative, dans le domaine de la voirie pour déterminer, si des places de stationnement sont occupées ou non.

Différents systèmes sont connus pour détecter si des emplacements de stationnement sont occupés ou non.

On connaît en particulier des solutions qui utilisent des capteurs basés sur des technologies de type magnétomètre ou radar. Ces technologies ne sont pas flexibles car elles nécessitent un capteur par emplacement.

D'autres technologies connues proposent d'acquérir des images des emplacements et d'analyser ces images pour déterminer si des emplacements présents dans ces images sont occupés ou non.

On connait en particulier des techniques dans lesquelles les images sont acquises par des caméras, transmises par ces caméras à un serveur distant et analysées par ce serveur distant. De telles solutions posent des questions du respect de la vie privée et nécessitent une bande passante sur le réseau relativement importante pour le transfert de ces images.

D'autres techniques proposent un traitement d'image local, c'est-à-dire dans le dispositif d'acquisition d'image. Mais elles nécessitent de raccorder le dispositif au réseau électrique. Ceci n'est pas satisfaisant pour toutes les applications.

D'autres dispositifs fonctionnent sur batterie ou sur panneau solaire, acquièrent des images, les traitent et envoient le résultat de leur traitement à un site distant. Mais ils manquent d'autonomie, et ne sont pas en mesure d'envoyer ces résultats avec une fréquence suffisante pour toutes les applications.

L'invention propose une solution qui ne présente pas les inconvénients précités.

### Objet et résumé de l'invention

Plus précisément, l'invention concerne un dispositif autonome de détermination de l'occupation d'au moins un emplacement ayant une forme prédéterminée. Ce dispositif comporte :
- un module d'acquisition d'au moins une image couvrant une zone géographique comportant ledit au moins un emplacement ;
- un module de prétraitement d'image configuré pour, lorsqu'il est mis en œuvre dynamiquement par un contrôleur de gestion d'énergie du dispositif autonome, obtenir au moins une image prétraitée à partir de ladite au moins une image ;
- au moins un réseau de neurones configuré pour déterminer, à partir de ladite au moins une image acquise par le module d'acquisition ou à partir de ladite image prétraitée, une information binaire représentative de l'occupation ou de la non occupation dudit au moins un emplacement ; et
- un module d'envoi de ladite information binaire à un serveur distant via un réseau de télécommunications.

Ce dispositif comporte :
- au moins une batterie configurée pour alimenter les modules précités et le contrôleur de gestion d'énergie ; et
- un module de routage d'énergie configuré pour router une énergie électrique obtenue à partir d'au moins une source d'énergie renouvelable vers ces modules et le contrôleur, ou vers ladite au moins une batterie ;
- le contrôleur de gestion d'énergie étant configuré pour contrôler au moins une opération d'au moins un des modules en fonction d'au moins un critère prédéterminé.

Dans un mode particulier de mise en œuvre de l'invention, le contrôleur de gestion d'énergie est configuré pour contrôler au moins une opération du module d'acquisition d'image et/ ou d'au moins une opération du module de prétraitement d'image et/ou une opération dudit traitement par réseau de neurones un desdits modules au moins en fonction d'au moins un critère prédéterminé prenant en compte :
- un niveau de charge de ladite batterie; ou
- au moins une mesure d'une quantité d'énergie renouvelable disponible ; ou
- au moins une prédiction d'une quantité d'énergie renouvelable disponible pour l'avenir.

Les modules précités peuvent être des modules matériels ou logiciels.

Corrélativement, l'invention vise aussi un procédé de détermination de l'occupation d'au moins un emplacement ayant une forme prédéterminée, ce procédé comportant :
- une étape d'acquisition d'au moins une image couvrant une zone géographique comportant ledit au moins un emplacement ;
- une étape de détermination, en utilisant un réseau de neurones, à partir de ladite au moins une image ou à partir d'une image obtenue par un prétraitement optionnel de ladite au moins une image déclenché dynamiquement, une information binaire représentative de l'occupation ou de la non occupation dudit au moins un emplacement ; et
- une étape d'envoi de cette information binaire à un serveur distant via un réseau de télécommunications.

Ce procédé est mis en œuvre par un dispositif autonome alimenté à partir d'au moins une source d'énergie renouvelable et il comporte :
- au moins une étape de gestion de l'énergie du dispositif autonome, en contrôlant, en fonction d'au moins un premier critère prédéterminé, une opération mise en œuvre au cours de ladite étape d'acquisition, ou dudit prétraitement ou de ladite étape de détermination ou de ladite étape d'envoi.

Pour simplifier, le contrôleur de gestion d'énergie sera parfois aussi appelé simplement « le contrôleur ».

Ainsi, et d'une façon générale, l'invention propose un dispositif autonome et un procédé mis en œuvre par un dispositif autonome pour déterminer si un emplacement est occupé ou non.

Le dispositif est dit autonome en ce qu'il n'est jamais alimenté par le réseau électrique.

De façon très avantageuse, le dispositif selon l'invention comporte une ou plusieurs batteries, rechargeables à partir d'une ou plusieurs sources d'énergie renouvelables pour alimenter les composants nécessaires au fonctionnement du dispositif, notamment le module d'acquisition d'image, le module de prétraitement, le réseau de neurones, le module d'envoi et le contrôleur de gestion d'énergie.

Dans un mode particulier de réalisation le dispositif comporte une seule batterie configurée pour se recharger à partir d'une seule source d'énergie renouvelable.

Tout type d'énergie renouvelable peut être utilisé pour la mise en œuvre de l'invention.

De façon connue par l'homme du métier, le ou les énergies renouvelables peuvent être captées par des capteurs adaptés au type d'énergie renouvelable (panneau solaire, éolienne, ...) et peuvent être transformées en énergie électrique pour alimenter le dispositif selon l'invention, par exemple via un câble.

Dans un mode de réalisation, les différents modules et le contrôleur peuvent aussi être alimentés directement à partir de l'énergie électrique produite à partir de la ou des sources d'énergie renouvelable.

Par conséquent, dans un mode de réalisation de l'invention, le dispositif comporte un module de routage d'énergie configuré pour router une énergie électrique obtenue à partir de la ou des sources d'énergie renouvelable vers lesdits modules, ledit contrôleur, ou ladite au moins une batterie.

Dans certains modes de réalisation, le dispositif autonome selon l'invention peut comporter une batterie supplémentaire pour alimenter certains composants critiques, par exemple une horloge temps réel (en anglais RTC, real time clock).

L'invention peut s'appliquer pour déterminer l'occupation ou la non-occupation de tout type d'emplacement, dès lors que la forme de cet emplacement est connue.

Dans un mode de réalisation, l'invention détermine simplement si l'emplacement est occupé ou non. En variante elle détermine en outre le type de l'occupant.

Ainsi, et de façon non limitative, l'invention peut permettre de déterminer si un emplacement de stationnement est occupé ou non, et éventuellement si l'emplacement de stationnement est occupé par une voiture, un vélo, des déchets,

De façon très similaire, l'invention peut être mise en œuvre dans un port ou dans un aéroport pour déterminer si un emplacement est occupé par un bateau, ou par un avion, et éventuellement le type de cette embarcation.

L'invention peut aussi être utilisée pour déterminer si un emplacement de parking à vélo est occupé ou non.

L'invention ne se limite pas à la détermination de l'occupation d'un emplacement de stationnement par un véhicule. Elle peut être utilisée pour détecter l'occupation d'un emplacement par des objets quelconques ou par des êtres vivants, par exemple des humains.

L'invention peut ainsi être utilisée pour déterminer si un trottoir est libre, occupé ou partiellement occupé, et le cas échant si l'occupation totale ou partielle du trottoir est le fait de déchets sauvages ou de travaux par exemple.

L'invention peut aussi être utilisée pour déterminer si un arrêt de bus est non occupé (aucun usager en attente) ou s'il est occupé et dans ce cas déterminer le nombre d'usagers en attente.

L'invention peut s'appliquer en extérieur ou en intérieur. Elle peut par exemple permettre de déterminer si des sièges sont occupés dans un stade, dans une salle de concert...

D'une façon générale, il est nécessaire que l'emplacement dont on cherche à déterminer le caractère occupé ou non soit dans le champ de vision du dispositif d'acquisition pour que ce dernier puisse acquérir des images (photographies ou vidéos) de cet emplacement.

Le dispositif selon l'invention est donc destiné à être placé dans un endroit adapté à la surveillance d'un ou plusieurs emplacements. En pratique, le dispositif d'acquisition acquiert des images couvrant une zone géographique (rue, route, salle, parc, arène...) plus large que ce ou ces emplacements.

Le dispositif selon l'invention est prévu pour une utilisation fixe.

Il peut par exemple être fixé à ou intégré à une façade de bâtiment ou intégré dans un mobilier urbain, par exemple un lampadaire, un panneau publicitaire, un balcon, un abri, un mat, ou un candélabre.

L'invention concerne également un équipement urbain comportant un dispositif tel que mentionné ci-dessus.

La hauteur de l'installation du dispositif est choisie en fonction du type d'application et en particulier en fonction de l'optique du dispositif d'acquisition et da la zone géographique à couvrir.

Il est par exemple fixé entre 2,5m et 20m au-dessus du niveau du sol.

Dans un mode de réalisation, le contrôleur de gestion d'énergie est configuré pour activer, désactiver ou basculer au moins un composant choisi parmi lesdits modules et ledit contrôleur de gestion d'énergie lui-même dans un mode veille en fonction dudit au moins un critère prédéterminé.

Dans un mode particulier de réalisation de l'invention, le contrôleur de gestion d'énergie est en particulier configuré pour pouvoir :
- activer ou désactiver la liaison électrique d'alimentation d'un composant, par exemple en agissant sur un interrupteur électronique ; ou
- basculer le composant dans un mode basse consommation, ou mode veille.

La basse consommation d'un composant peut par exemple être de l'ordre de 6% de la consommation du composant lorsque celui-ci est en fonctionnement.

Dans un mode particulier de réalisation, ledit au moins un critère prédéterminé est choisi parmi :
- une information représentant un niveau de charge de ladite batterie ;
- une information représentant au moins une mesure d'une quantité d'énergie renouvelable disponible ;
- une information représentant au moins une mesure d'une quantité d'énergie renouvelable prévue pour l'avenir ; - une information de date lue dans un calendrier ;
- un niveau de luminosité ;
- un niveau sonore.

Dans un mode particulier de réalisation de l'invention, le dispositif autonome selon l'invention comporte plusieurs réseaux de neurones, chacun ayant été entraîné avec des images ayant un format d'images différent.

Par exemple, le dispositif autonome comporte :
- un réseau de neurones entraîné avec des images au format RGB ;
- un réseau de neurones entraîné avec des images en niveau de gris ;
- un réseau de neurones entraîné avec des images obtenues par un procédé de détection de contours ; et
- un réseau de neurones entraîné avec des images décomposées en composantes principales PCA (en anglais principal component analysis),
le contrôleur de gestion d'énergie étant configuré pour activer sélectionner dynamiquement, parmi lesdits réseaux de neurones celui à utiliser pour traiter l'image acquise ou l'image prétraitée, c'est-à-dire pour déterminer à partir de ladite au moins une image acquise ou prétraitée, une information binaire représentative de l'occupation ou de la non occupation dudit au moins un emplacement.

On rappelle qu'en traitement d'image, un procédé de détection de contours permet de repérer les points d'une image correspondent à un changement brutal de l'intensité lumineuse, de sorte à réduire de manière significative la quantité de données en conservant les informations juger pertinentes. Pour plus de renseignements, l'homme du métier peut se reporter au document https://en.wikipedia.org/wiki/Edge_detection.

Le ou les réseaux de neurones utilisés dans l'invention sont configurés pour analyser une image fournie en entrée de ce réseau, pour déterminer si chacun des emplacements détectés dans l'image est occupé ou non et pour générer une information binaire fonction de cette détermination.

Dans un mode de réalisation, ces réseaux de neurones sont configurés pour mettre en œuvre une classification d'images pour déterminer aussi le type de l'occupant. Par exemple, si l'invention est utilisée dans un contexte de voirie, un réseau de neurones pourrait détecter si l'occupant est une voiture, une moto, un camion, un vélo, une ou plusieurs personnes, des déchets, etc.

Dans un mode particulier de réalisation, l'information binaire et le type de l'occupant peuvent être déterminés en fonction d'un seuil de confiance minimum souhaité.

Par exemple, si un seuil de confiance minimum est fixé à 80% pour la détection d'un camion dans un emplacement, s'il est déterminé qu'un emplacement EMPi contient un camion avec une probabilité de 60%, alors cet emplacement sera considéré inoccupé.

Dans un mode de réalisation, les seuils de confiance minimum peuvent être modifiés, par exemple via le réseau.

Chacun des réseaux de neurones peut être entraîné sur un jeu d'entraînement comportant des dizaines de milliers d'images contenant les types d'emplacements concernés avec un mélange équilibré : emplacements libres, emplacements occupés par différents types d'objets, et sous des conditions de luminosité, de visibilité et atmosphériques variables, ...

Dans un mode particulier de réalisation, un réseau de neurones est entraîné au préalable sur un ordinateur, seul le résultat de l'entraînement étant implémenté dans le dispositif autonome.

En variante, un réseau de neurones pourrait être entraîné par le dispositif autonome ou par un dispositif comportant des composants identiques au dispositif autonome.

Dans le mode de réalisation décrit ici, le ou les réseaux de neurones sont des réseaux convolutionnels.

Dans un mode particulier de réalisation de l'invention, le contrôleur est apte à mettre à jour un ou plusieurs réseaux de neurones du dispositif autonome à partir de données reçues via le réseau de télécommunication.

Cette mise à jour peut par exemple consister à :
- modifier un seuil de confiance minimum utilisé pour déterminer si un emplacement est occupé ou non ;
- modifier des poids du réseau.

Conformément à l'invention, les images acquises ou prétraitées sont traitées au sein du dispositif pour déterminer (i) si les emplacements sont occupés ou non et (ii) éventuellement le type de l'occupant de ces emplacements.

L'indication selon laquelle un emplacement est occupé ou non est une information binaire au sens de l'invention. Elle peut avantageusement être codée sur un bit. Mais l'invention ne se limite pas à ce mode de réalisation. Au sens de l'invention, l'expression « information binaire » couvre toute information, quelle que soit sa taille, qui permet au serveur de déterminer, sur la base de cette seule information, si un emplacement est occupé ou non.

Dans un mode particulier de réalisation de l'invention, le contrôleur de gestion d'énergie est configuré pour:
- fixer un paramètre de configuration du module d'acquisition d'image, par exemple une fréquence d'acquisition des images ou une durée d'exposition ; et/ou
- envoyer au module de prétraitement, une instruction de prétraitement de ladite image acquise; et/ou
- sélectionner un réseau de neurones et/ou fixer un paramètre du réseau de neurones sélectionné; et/ou
- fixer un paramètre du module d'envoi.

Le dispositif autonome selon l'invention comporte un module de prétraitement d'image configuré pour, lorsqu'il est mis en œuvre dynamiquement par le contrôleur, prétraiter l'image acquise avant son traitement par le réseau de neurones.

Dans un mode particulier de réalisation, le contrôleur de gestion d'énergie est configuré pour contrôler ledit module de prétraitement d'image pour qu'il obtienne ladite image prétraitée à partir de ladite image acquise en convertissant un format de ladite image acquise en un autre format correspondant au format des images avec lequel ledit réseau de neurones sélectionné a été entraîné.

Dans un mode particulier de réalisation, le module d'acquisition génère des images selon un premier format (par exemple RGB) et le module de prétraitement est apte à convertir une image selon ce premier format en au moins un autre format d'image, par exemple, en niveaux de gris, au format PCA, ou en appliquant à cette image un procédé de détection de contours.

Dans un mode particulier de mise en œuvre de l'invention, le contrôleur de gestion d'énergie sélectionne le réseau de neurones au moins en fonction :
- de caractéristiques de l'image acquise ou prétraitée à analyser ; et
- du niveau d'énergie de la batterie ou de la quantité d'énergie disponible ou prévue pour l'avenir.

En variante cette sélection peut aussi se faire en prenant en outre en compte un seuil minimum de détection souhaitée.

Dans un mode particulier de mise en œuvre de l'invention, le contrôleur de gestion d'énergie:
- configure le module d'acquisition d'image ;
- décide de prétraiter ou non l'image acquise ; et
- active un réseau de neurones,
en fonction du niveau de charge de la batterie, de la quantité d'énergie renouvelable disponible, ou d'un niveau de luminosité, de sorte à optimiser un compromis entre :
(i) d'une part, l'énergie consommée pour éventuellement prétraiter l'image et pour son analyse par le réseau de neurones sélectionné ; et
(ii) d'autre part la qualité de détection de l'occupation des emplacements dans cette image.

Ainsi, et d'une façon générale, le dispositif autonome selon l'invention est remarquable en ce qu'il combine l'usage d'un module de prétraitement d'image et celui d'un réseau de neurones dans le cadre d'un compromis qualité de précision de détection de l'occupation des emplacements /consommation énergétique.

Par exemple, un vecteur en niveaux de gris a trois fois moins de paramètres qu'une image en RGB. L'inférence du réseau de neurones pour traiter une image en niveaux de gris est plus rapide et moins consommatrice de mémoire vive que celui d'une image en RGB.

Dans un mode particulier de réalisation, le contrôleur de gestion d'énergie est configuré pour envoyer une commande au réseau de neurones sélectionné de sorte à ce qu'il choisisse un chemin dans ce réseau de neurones pour effectuer une inférence lors de l'analyse de ladite image acquise ou prétraitée.

Ainsi, l'invention comporte un mode de réalisation dans lequel le contrôleur de gestion d'énergie influe sur les opérations mises en œuvre par une inférence pour analyser une image (détecter les emplacements, leur occupation et éventuellement le type d'occupant).

Par exemple, des inférences moins consommatrices en énergie (nécessitant moins d'opérations ou de mémoire vive, ...) mais moins précises dans leur capacité d'analyse ou de détection peuvent être mises en œuvre pour préserver l'énergie du dispositif autonome lorsque le niveau de charge de la batterie et/ou la quantité d'énergie renouvelable disponible sont relativement faibles.

Inversement, des inférences plus consommatrices en énergie mais plus précises dans leur capacité d'analyse ou de détection peuvent être mises en œuvre pour améliorer la détection lorsque le niveau de charge de la batterie et/ou la quantité d'énergie renouvelable disponible sont relativement élevées.

Les informations binaires déterminées par le réseau de neurones actif et représentatives de l'occupation des emplacements détectés dans l'image acquise ou prétraitée sont destinées à être envoyées à un serveur via le réseau de communication.

On note que les images en tant que telles ne sont pas envoyées via le réseau. Cela permet de diminuer la quantité d'information sur le réseau et de ne pas envoyer sur le réseau de données privées, par exemple des images de personnes acquises par le dispositif selon l'invention.

Lorsque l'information binaire est codée sur un bit, la quantité d'informations véhiculées sur le réseau puisqu'elle peut se limiter à :
- un identifiant de l'emplacement ; et
- l'information binaire

L'envoi des données par le dispositif au serveur peut se faire par tout type de réseau, directement ou via un relai.

Par exemple, le module d'envoi du dispositif selon l'invention peut être un module 4G, 5G, WiFi, LoRa, Sigfox, GPRS, GSM configuré pour envoyer les données directement à ce serveur.

Le module d'envoi du dispositif selon l'invention peut aussi être configuré pour envoyer les données à un relai qui les traite ou les regroupe avant de les envoyer au serveur.

Lorsque le module de communication communique sur un réseau de type 4G, le module COM peut être par exemple :
- un module de carte SIM de type CAT-1, CAT-M, NB-IOT, un module CAT-M et NB-IOT permettant de limiter la consommation d'énergie grâce à une vitesse de communication réduite, mais avec la capacité de passer en mode d'économie d'énergie (en anglais Power Saving Mode) et avec des capacités d'extinction et d'allumage rapides ou ;
- une carte SIM avec un abonnement de machine à machine.

Dans un mode particulier de réalisation, le contrôleur de gestion d'énergie est configuré pour fixer une fréquence d'acquisition de ladite image et une fréquence d'envoi desdites informations binaires en fonction dudit au moins un critère prédéterminé.

Par exemple, le contrôleur de gestion d'énergie peut être configuré pour acquérir une image et envoyer les informations binaires d'occupation des emplacements détectés dans ces images :
- selon un premier rythme, par exemple toutes les 20 secondes si le niveau de charge de la batterie est supérieur à un premier seuil prédéterminé ;
- selon un deuxième rythme, par exemple toutes les 40 secondes si le niveau de charge de la batterie est supérieur à un deuxième seuil prédéterminé ;
- etc.

Dans un mode particulier de réalisation, le dispositif autonome comporte une mémoire comportant une cartographie de la zone géographique, l'information binaire étant envoyée par le module d'envoi, en association avec un identifiant dudit au moins un emplacement dans cette cartographie.

Dans un mode particulier de réalisation de l'invention, le dispositif autonome comportant un processeur configuré pour mettre en œuvre le procédé de détermination selon l'invention.

Dans un mode particulier de réalisation, la fréquence de ce processeur est comprise entre 200 MHz et 1Ghz.

Les différentes étapes du procédé de détermination selon l'invention peuvent être mises en œuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de détermination tels que présenté ci-dessus. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'architecture du dispositif peut être globalement celle d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

Le dispositif selon l'invention est remarquable en ce qu'il comporte, en combinaison, un dispositif de prétraitement d'images et au moins un réseau de neurones, tous mis en œuvre par des composants alimentés exclusivement à partir d'énergie(s) renouvelable(s), et dont le fonctionnement peut être modifié dynamiquement par un contrôleur de gestion d'énergie.

Dans un mode particulier de réalisation, le dispositif autonome ne comporte pas de système d'exploitation.

Autrement dit, le procédé de détermination est mis en œuvre par des composants matériels et logiciels dédiés à la mise en œuvre des étapes de ce procédé, ie non génériques,

Cette configuration sans système d'exploitation permet de réduire considérablement la consommation du dispositif autonome et d'augmenter considérablement le temps de veille des composants.

Une telle configuration permet au dispositif autonome d'acquérir des images, et de les traiter, à un rythme beaucoup plus soutenu que ce que peuvent faire les dispositifs connus à ce jour.

Par exemple, les inventeurs ont pu réaliser un dispositif autonome alimenté exclusivement par panneau solaire, muni d'un processeur à 300MHz et d'un réseau de neurones d'environ 90.000 paramètres, et apte à acquérir et traiter des images de 640^{∗}480 pixels comportant 5 emplacements, et à envoyer les informations binaires obtenues avec un module de communication de type CAT-M environ toutes les 20 secondes. Sur ces périodes de 20 secondes, la durée d'acquisition et de traitement d'une image est d'environ 6s, les composants étant mis en veille pendant environ 14 secondes. La consommation moyenne de ce dispositif est d'environ 40 mA en moyenne avec des pics à 150 mA.

### Brève description des dessins

D'autres particularités et avantages de la présente invention apparaitront dans la description suivante d'un mode de réalisation donné à titre d'exemple non limitatif, en référence aux dessins annexés, dans lesquels :
[Fig. 1] La figure 1 représente un dispositif autonome conforme à un mode particulier de réalisation de l'invention, dans son environnement ;
[Fig. 2] La figure 2 représente une image acquise par le dispositif autonome de la figure 1 ;
[Fig. 3] La figure 3 représente des informations binaires pouvant être utilisées dans un premier mode de réalisation de l'invention ;
[Fig. 4] La figure 4 représente des informations binaires pouvant être utilisées dans un deuxième mode de réalisation de l'invention ;
[Fig. 5A] La figure 5A représente l'architecture fonctionnelle d'un dispositif autonome conforme à un premier mode de réalisation de l'invention ;
[Fig. 5B] La figure 5B représente l'architecture fonctionnelle d'un dispositif autonome conforme à un deuxième mode de réalisation de l'invention ;
[Fig. 6 La figure 6 représente l'architecture fonctionnelle d'un dispositif autonome conforme à un deuxième mode de réalisation de l'invention ;
[Fig. 7] La figure 7 représente la consommation d'un dispositif autonome conforme à l'invention dans les deux modes de réalisation des figures 5 et 6 ;
[Fig. 8] La figure 8 représente l'architecture matérielle d'un dispositif autonome conforme à l'invention ; et
[Fig. 9] La figure 9 représente sous forme d'organigramme les principales étapes d'un procédé de détermination conforme à un mode particulier de réalisation de l'invention.

### Description de modes de réalisation de l'invention

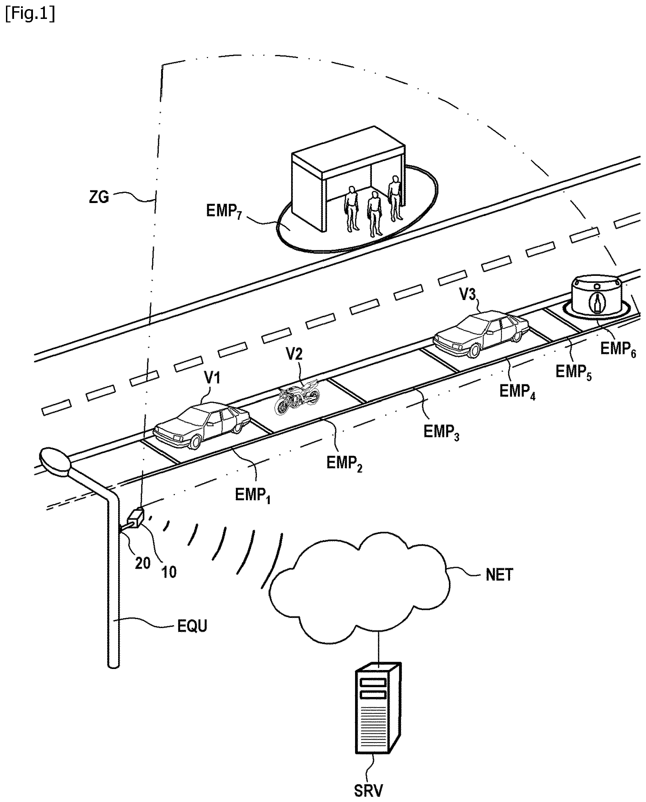

La **figure 1** représente un dispositif autonome 10 conforme à un mode particulier de réalisation de l'invention, dans son environnement.

Dans le mode de réalisation décrit ici, le dispositif autonome 10 est fixé à un lampadaire EQU. Il est monté sur une rotule 20 pour pouvoir être orienté.

En variante, il pourrait être intégré à l'intérieur du pied du lampadaire.

Le lampadaire EQU est un exemple d'équipement urbain au sens de l'invention.

Le dispositif autonome 10 comporte un module d'acquisition d'images, par exemple une caméra.

Le dispositif autonome 10 est fixé et orienté de sorte à ce que le module d'acquisition d'images puisse acquérir des images d'une zone géographique ZG.

Cette zone géographique ZG couvre des emplacements EMPᵢ de formes prédéterminées. Plus précisément, dans l'exemple de la figure, la zone géographique ZG comporte :
- des emplacements EMP₁ à EMP4 d'une forme rectangulaire de taille connue sur lesquels des véhicules à moteur peuvent stationner ;
- un emplacement EMP₅ d'une forme rectangulaire d'une autre taille réservée à des trottinettes ;
- un emplacement EMP₆ sensiblement circulaire pouvant accueillir une benne pour des déchets ; et
- un emplacement EMP₇ ovale constituant une zone d'attente devant un abri bus.

Nous allons décrire ci-après comment le dispositif autonome 10 peut communiquer régulièrement une information sur l'occupation de ces emplacements à EMPᵢ un serveur distant SRV, via un réseau NET,.

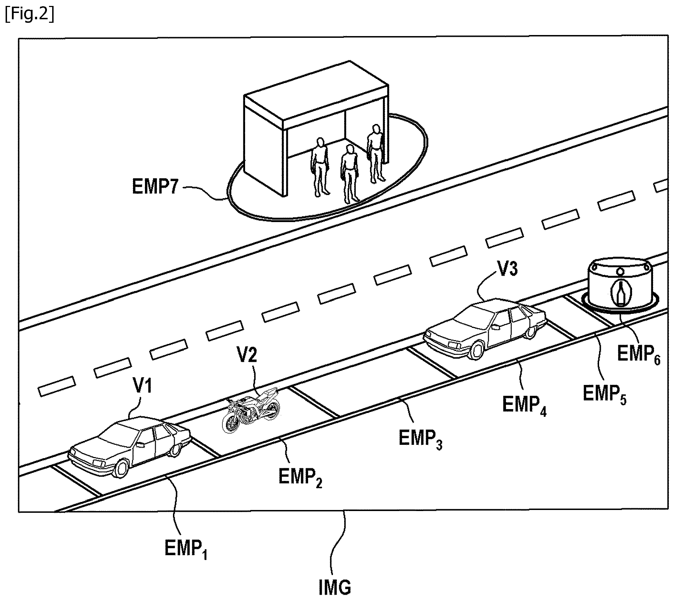

La **figure 2** représente une image IMG acquise par le dispositif autonome 10 de la figure 1.

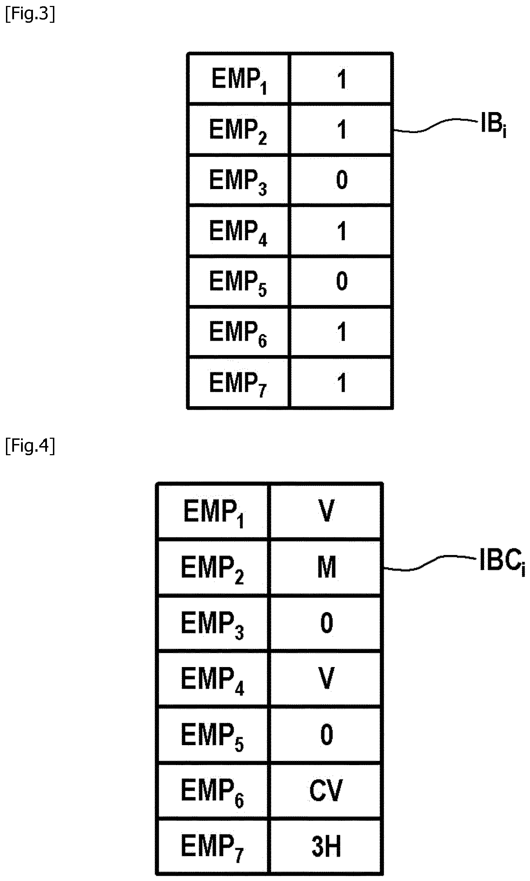

La **figure 3** représente des informations binaires IBᵢ pouvant être utilisées dans un premier mode de réalisation de l'invention.

Dans l'exemple de la figure 3, ces informations binaires IBᵢ sont enregistrées dans une table. Chacune est associée à un identifiant de l'emplacement EMPᵢ, noté également EMPᵢ par simplicité. L'information binaire IBᵢ est égale à 1 si l'emplacement EMPᵢ est occupé et à 0 dans le cas contraire. Elle peut être codée sur 1 bit.

Dans l'exemple de la figure 3 :
IB₁ = 1 car l'emplacement EMP₁ est occupé ;
IB₂ = 1 car l'emplacement EMP₂ est occupé ;
IB₃ = 0 car l'emplacement EMP₃ est non occupé ;
IB₄ = 1 car l'emplacement EMP₄ est occupé ;
IB₅ = 0 car l'emplacement EMP₅ est non occupé ;
IB₆ = 1 car l'emplacement EMP₆ est occupé ;
IB₇ = 1 car l'emplacement EMP₇ est occupé.

La **figure 4** représente des informations binaires IBCᵢ pouvant être utilisées dans un deuxième mode de réalisation de l'invention.

Dans l'exemple de la figure 4, ces informations binaires IBCᵢ sont enregistrées dans une table. Chacune est associée à un emplacement EMPᵢ. L'information binaire IBCᵢ est égale à 0 si l'emplacement EMPᵢ est occupé et différent de 0 dans le cas contraire.

Bien que codée sur plus d'un bit, et bien que pouvant prendre plus de deux valeurs, l'information IBCᵢ constitue une information binaire au sens de l'invention car son analyse permet, par exemple au serveur SRV de déterminer, sur la base de cette seule information, si un emplacement EMPᵢ est occupé ou non.

Dans l'exemple de la figure 4, l'information IBCᵢ donne, lorsque l'emplacement EMPi est occupé, des informations sur l'occupant ou sur la nature de l'occupation, par exemple un type de l'occupant, un nombre d'occupants, une proportion d'occupation, ...

Dans l'exemple de la figure 4 :
IBC₁ = « V » car l'emplacement EMP₁ est occupé par une voiture ;
IBC₂ = « M » car l'emplacement EMP₂ est occupé par une moto ;
IBC₃ = 0 car l'emplacement EMP₃ est non occupé ;
IBC₄ = « V » car l'emplacement EMP₄ est occupé par une voiture ;
IBC₅ = 0 car l'emplacement EMP₅ est non occupé ;
IBC₆ = CV car l'emplacement EMP₆ est occupé par un container de verre ;
IBC₇ = « 3H »1 car l'emplacement EMP₇ est occupé par trois hommes.

Les informations binaires (par exemple IBᵢ ou IBCᵢ) sont destinées à être envoyées au serveur SRV, en association avec les identifiants EMPᵢ des emplacements.

Les identifiants EMPᵢ permettent d'identifier les emplacements de manière unique, selon une convention partagée entre le dispositif autonome 10 et le serveur SRV.

Dans un mode particulier de réalisation, les identifiants EMPᵢ permettent de repérer les positions des emplacements EMPᵢ dans une cartographie de la zone géographique ZG.

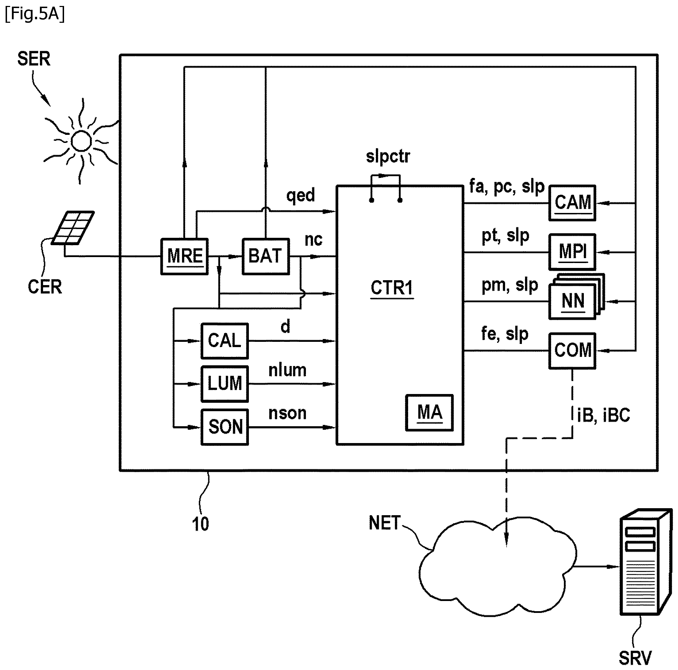

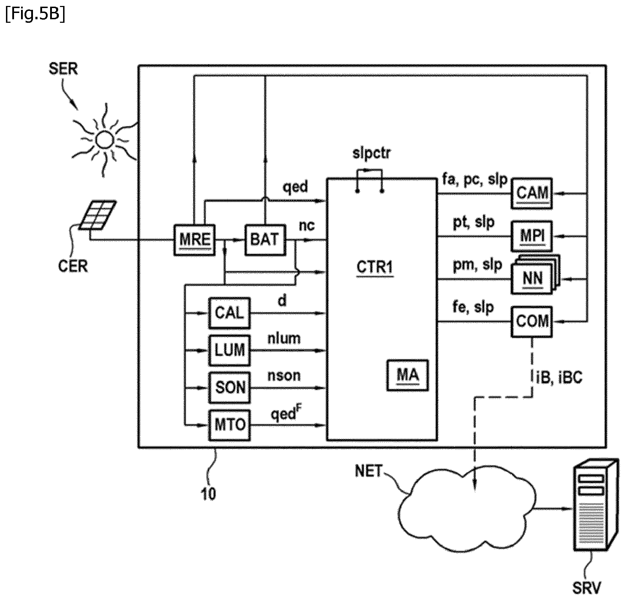

Les **figures 5A** **et** **5B** représentent l'architecture fonctionnelle d'un dispositif autonome conforme à un premier mode et à un deuxième mode de réalisation de l'invention.

Dans l'exemple de la figure 5A, le dispositif autonome 10 est raccordé à un capteur CER apte à capter une énergie renouvelable émise par une source d'énergie renouvelable SER.

Dans l'exemple de la figure 5A, le capteur CER est un panneau solaire configuré pour capter de l'énergie solaire.

Dans l'exemple de la figure 5A, le capteur CER est relié à un module de routage d'énergie MRE configuré pour transformer l'énergie renouvelable en énergie électrique et pour router cette énergie électrique soit vers une batterie BAT soit directement vers différents composants CAL, LUM, SON, CTR1, CAM, MPI, NN et COM qui seront décrits ci-dessous.

Dans l'exemple de réalisation décrit ici, on considère une seule batterie BAT mais en variante plusieurs batteries rechargeables à partir d'une ou plusieurs sources d'énergie renouvelables peuvent être utilisées.

Un tel module de routage d'énergie MRE est connu de l'homme du métier. Ils peuvent comporte des composants de gestion d'énergie comme par exemple des convertisseurs DC/DC, des chargeurs, des limiteurs, des interrupteurs électroniques, des protecteurs de batterie.

Dans le mode de réalisation de l'invention décrit ici, le module de routage d'énergie MRE est configuré pour que les différents composants CAL, LUM, SON, CTR1, CAM, MPI, NN et COM le contrôleur soient :
- alimentés directement (sans utiliser la batterie BAT) lorsque la batterie BAT est pleinement chargée et que l'énergie reçue de la source d'énergie renouvelable SER est suffisante, afin de préserver la batterie BAT ;
- alimentés par la batterie BAT lorsque celle-ci n'est pas pleinement chargée, la batterie BAT se rechargeant à partir de la source d'énergie renouvelable SER.

Le composant CAM correspond au module d'acquisition d'images mentionné précédemment. Il acquiert des images IMG de la zone géographique ZG qui comporte les emplacements EMPᵢ.

On notera FI_{A} le format des images acquises, c'est-à-dire en sortie, du module d'acquisition d'images. Dans un mode de réalisation, le format FI_{A} est le format RGB.

On notera DI_{A} la définition des images acquises, c'est-à-dire en sortie, du module d'acquisition d'images. Dans un mode de réalisation, la définition DI_{A} est 640x640 px (pixels).

Le contrôleur CTR1 est un contrôleur apte agir sur les composants CAM, MPI, NN, COM pour mettre en œuvre des mesures de préservation d'énergie en fonction de paramètres fournis par au moins un élément choisi parmi le capteur d'énergie renouvelable CER, la batterie BAT les composants CAL, LUM, SON.

Dans le mode de réalisation décrit ici, la capteur d'énergie renouvelable fournit au contrôleur CTR1 une mesure qed de la quantité d'énergie renouvelable disponible à un instant t, par exemple un niveau d'ensoleillement.

Dans le mode de réalisation décrit ici, la batterie BAT fournit au contrôleur CTR1 son niveau de charge nc.

Dans un mode de réalisation de l'invention décrit ici, le contrôleur CTR1 est configuré pour éteindre le dispositif autonome 10 lorsque le niveau de charge de la batterie nc est inférieur à un seuil, par exemple 20%.

Dans l'exemple de réalisation décrit ici, le composant CAL est un calendrier qui mémorise la date et l'heure courante. Il fournit une information d de date au contrôleur CTR1. Cette information de date est à comprendre au sens large. Elle peut comprendre l'année, le mois, le jour, le jour de la semaine, l'heure, la minute, la seconde courante, etc.

Dans l'exemple de réalisation décrit ici, le composant LUM est capteur de luminosité. Il fournit un niveau de luminosité courant nlum au contrôleur CTR1.

Dans l'exemple de réalisation décrit ici, le composant SON est un capteur sonore. Il fournit un niveau sonore courant nson au contrôleur CTR1.

Le composant MPI est un module de prétraitement d'images. Il peut être utilisé ou non pour prétraiter toutes ou certaines des images acquises par le module d'acquisition d'images CAM.

Par la suite, on notera :
- IMG : une image acquise par le module d'acquisition d'images CAM ;
- IMG^{∗} : l'image résultant du prétraitement de l'image IMG par le module de prétraitement MPI.

Dans le mode particulier de réalisation décrit ici, le module de prétraitement d'images MPI est configuré pour pouvoir convertir une image IMG au format FI_{A} en une image IMG^{∗} avec un autre format d'image FIₖ.

Dans le mode de réalisation décrit ici, le module de prétraitement d'images MPI est apte à convertir une image IMG, au format FA_{I} par exemple RGB, en une image IMG^{∗} au format FI₁, FI₂ ou FI₃ dans lesquels :
- FI₁ est un format d'images en niveaux de gris ;
- FI₂ est un format d'images obtenues par un procédé de détection de contours ; et
- FI₃ est un format d'une image décomposée en composantes principales PCA (en anglais principal component analysis).

Dans le mode particulier de réalisation décrit ici, le module de prétraitement d'images MPI est configuré pour pouvoir convertir une image IMG à la définition DI_{A} en une image IMG^{∗} avec une autre définition DIₖ.

Dans le mode de réalisation décrit ici, le module de prétraitement d'images MPI est apte à convertir une image IMG à la définition DA_{I} en une image IMG^{∗} de définition DA₁ (par exemple 100x100 px) ou DA₂ (par exemple 40x40px).

Dans un mode de réalisation, le contrôleur CTR1 est configuré pour pouvoir envoyer au module de prétraitement d'image MPI :
- une instruction slp pour passer le module de prétraitement d'image MPI en mode veille ;
- une instruction de prétraitement pt pour qu'il convertisse une image IMG au de définition DI_{A} et au format FI_{A} en une image avec une autre définition DIₖ et/ou un autre format FIₖ.

Dans le mode de réalisation décrit ici, l'instruction de prétraitement pt est choisie par le contrôleur CTR1 en fonction du niveau de charge de la batterie nc (ou de la quantité d'énergie renouvelable disponible qed) et du niveau de luminosité nlum.

Par exemple, en définissant un seuil de luminosité SL :
- si 30% ≤ nc < 40%, alors pt est une instruction de convertir l'image IMG en niveaux de gris (format FI₁) et selon une définition 100x100px (définition DI₁) ;
- si 15% ≤ nc < 30% et si nlum > SL, alors pt est une instruction de convertir l'image IMG au format EDGE (format FI₂) ;
- si 15% ≤ nc < 30% et si nlum ≤ SL, alors pt est une instruction de convertir l'image IMG en niveaux de gris (format FI₁) et selon une définition 40x40px (définition DI₂) ;
- si nc < 15%, alors pt est une instruction de convertir l'image IMG en une image IMG^{∗} au format PCA, avec des vecteurs d'une taille v choisie par le contrôleur CTR1 (format FI₃).

Dans le mode de réalisation décrit ici, si le niveau de charge de la batterie nc est supérieur ou égal à 40%, le module de prétraitement d'image MPI n'est pas mis en œuvre.

Le composant est un réseau de neurones NN apte à analyser une image IMG acquise sans prétraitement (par exemple si le niveau de charge de la batterie est supérieur ou égal à 40%) ou une image IMG^{∗} prétraitée pour :
- identifier si cette image comporte des emplacements EMPi ;
- déterminer si chacun de ces emplacements EMPᵢ est occupé ou non ;
- fournir, pour chacun de ces emplacements EMPᵢ, une information binaire, qui représente si cet emplacement est occupé ou non, et le cas échéant, le type de l'occupant. Cette information binaire est par exemple du type des informations IBᵢ ou IBCᵢ décrites en référence aux figures 3 et 4.

Dans le mode de réalisation décrit ici, le dispositif autonome comporte 4 réseaux de neurones, chacun entraîné avec un ensemble d'images d'un format différent. Dans le mode de réalisation décrit ici, le dispositif autonome comporte:
- un réseau de neurones NN entraîné avec des images au format RGB ;
- un réseau de neurones NN entraîné avec des images en niveaux de gris;
- un réseau de neurones NN entraîné avec des images au format EDGE; et
- un réseau de neurones NN entraîné avec des images au format PCA.

Dans un mode de réalisation, le contrôleur CTR1 est configuré pour sélectionner un de ces réseaux de neurones NN.

Si un réseau de neurones est mis en œuvre par un composant dédié, le contrôleur CTR1 est configuré pour pouvoir envoyer une instruction slp aux réseaux de neurones NN qui ne sont pas sélectionnés à un instant donné.

Dans le mode de réalisation décrit ici, le contrôleur CRT1 est configuré pour pouvoir envoyer une commande pn au réseau de neurones NN sélectionné de sorte à ce qu'il choisisse un chemin dans ledit réseau de neurones pour effectuer une inférence lors de l'analyse de ladite image acquise IMG ou prétraitée IMG^{∗}.

Dans le mode de réalisation décrit ici, par exemple si le niveau de charge de la batterie nc (ou la quantité d'énergie renouvelable disponible qed) est jugé relativement bas, la commande pn peut avoir pour conséquence que l'inférence :
- prend un chemin plus court dans les couches du réseau de neurones ;
- choisit un chemin avec des calculs moins consommateurs en terme de mémoire vive ou de processeur ;
- saute une ou plusieurs couches du réseau de neurones.

Au contraire, si le niveau de charge de la batterie nc (ou la quantité d'énergie renouvelable disponible qed) est jugé relativement haut, la commande pn peut avoir pour conséquence que l'inférence reprend un chemin de base plus performant mais plus consommateur.

Le dispositif autonome 10 comporte un module de communication COM configuré pour pouvoir envoyer l'information binaire (par exemple du type des informations IBᵢ ou IBCᵢ présentées en référence aux figures 3 et 4) représentatives de l'occupation d'un emplacement EMPi et éventuellement du type de l'occupant au serveur SRV.

Dans un mode particulier de réalisation décrit ici, le module COM est un module de type CAT-M, équipé d'une carte SIM CAT-M.

Dans un mode de réalisation, le contrôleur CTR1 est configuré pour pouvoir envoyer au module de communication COM :
- une instruction slp pour passer le module de communication COM en mode veille ;
- au moins un paramètre pe, à prendre en compte par le module de communication COM pour envoyer les informations binaires au serveur.

Dans le mode de réalisation décrit ici, ce paramètre pe impacte la consommation d'énergie par le module de consommation COM.

Ce paramètre pe peut par exemple avoir par conséquence :
- de modifier une fréquence d'envoi des informations binaires. ;
- d'envoyer les informations binaires à un relai, à charge de ce relai de les transmettre au serveur.

Dans le mode de réalisation décrit ici, le contrôleur CTR1 est configuré pour pouvoir envoyer au module d'acquisition d'images CAM:
- une instruction slp pour passer le module d'acquisition d'images CAM en mode veille ;
- au moins un paramètre pc, à prendre en compte par le module de d'acquisition d'images CAM pour acquérir les images IMG de la zone géographique IMG.

Dans un mode particulier de mise en œuvre de l'invention, le contrôleur CTR1, le paramètre de configuration pc du module d'acquisition d'image CAM, peut exemple :
- fixer la durée d'exposition de l'heure de la journée ou de la saison., par exemple en fonction de l'heure de la journée ou de la saison, celles-ci pouvant être obtenues à partir de l'information de date d fournie par le calendrier CAL ou du niveau de luminosité nlum ;
- diminuer la fréquence d'acquisition des images à des moments où la zone géographique ZG est moins fréquentée, par exemple la nuit.

En variante, le contrôleur CTR1 peut être configuré pour déterminer la luminosité d'une image acquise IMG, comparer cette luminosité avec une luminosité souhaitée, et lorsque l'il détecte qu'une image IMG acquise manque de luminosité, envoyer un paramètre pc au module d'acquisition CAM pour que celui-ci augmente la durée d'exposition de sorte à ce que l'image acquise suivante soit plus claire.

Dans le mode de réalisation de la figure 5, le dispositif autonome 10 et en particulier le contrôleur CTR1 ne comportent pas de système d'exploitation.

Dans le mode de réalisation de la figure 5, le contrôleur CTR1 comporte un moyen pour s'envoyer à lui-même un signal de contrôle slpctr pour passer en mode veille.

Dans l'exemple de la figure 5B, le dispositif comporte en outre un composant MTO est configuré pour prédire une quantité qed^{F} d'énergie renouvelable disponible pour l'avenir ou une information représentative d'une telle quantité, par exemple, à partir de données de prévisions météorologiques par exemple (temps nuageux, orageux, ensoleillement, ...

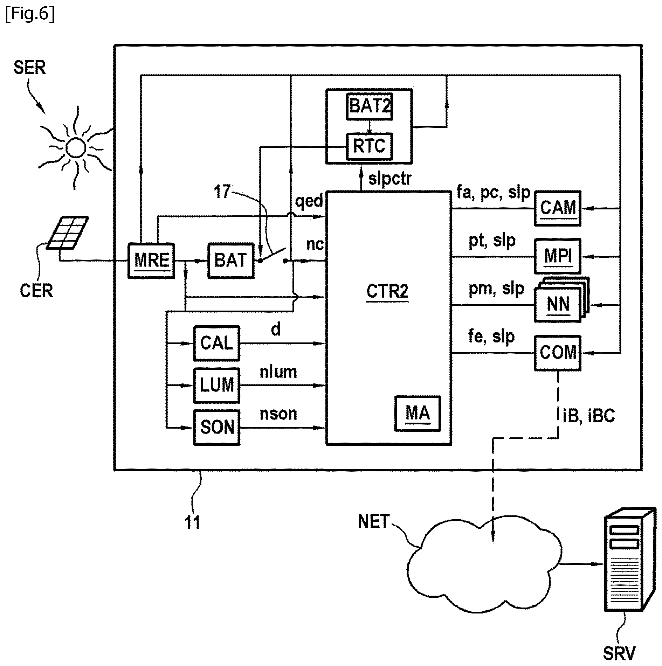

La **figure 6** représente l'architecture fonctionnelle d'un dispositif autonome 11 conforme à un deuxième mode de réalisation de l'invention.

Le dispositif autonome 11 diffère du dispositif autonome 10 décrit en référence à la figure 5, en ce que son contrôleur CTR2 comporte un système d'exploitation.

Dans le mode de réalisation de la figure 6, le dispositif autonome 11 comporte en outre une batterie indépendante BAT2 qui alimente une horloge temps réel (en anglais Real Time Clock) RTC.

Dans le mode de réalisation de la figure 6, le contrôleur CTR2 comporte un moyen pour envoyer à l'horloge temps réel RTC une instruction slpctr pour être éteint ou réveillé à un moment ou selon une fréquence prédéterminée de sorte à activer. Par exemple, le contrôleur CTR2 peut demander à l'horloge temps réel à être éteint dans 10 minutes puis réveillé dans 1 heure.

Cette caractéristique peut permettre d'activer ou d'éteindre l'ensemble des composants du dispositif 10 grâce à un interrupteur 17 placé sur leur ligne d'alimentation et contrôlé en ouverture et en fermeture par l'horloge RTC.

Dans un mode particulier de réalisation, le dispositif autonome 10 ou 11 selon l'invention comporte un module d'apprentissage MA pour optimiser encore la gestion d'énergie. Ce module d'apprentissage MA peut être ou ne pas être intégré au contrôleur CTR1, CTR2.

Lorsqu'il est mis en œuvre, ce module d'apprentissage MA est configuré pour constituer un historique de données au fur et à mesure de l'utilisation du dispositif autonome et pour utiliser cet historique pour optimiser la gestion de l'énergie du dispositif autonome.

Par exemple le module d'apprentissage MA, peut déterminer une corrélation entre la fréquence de changement de l'état occupé/non occupé d'un emplacement en fonction de certains critères.

Il peut par exemple déterminer que l'état occupé/non occupé des emplacements change moins fréquemment dans une plage temporelle donnée ou en fonction du niveau de luminosité ou du niveau sonore.

C'est par exemple le cas pour des emplacements de parking dans une zone commerciale, pendant les heures de fermeture ou pendant des plages de la journée à fréquentation plus réduite. Ces heures creuses peuvent par exemple être apprises par le module d'apprentissage MA fonction d'un niveau sonore ambiant ou en fonction d'un niveau d'éclairage.

Le dispositif autonome peut alors prendre des mesures pour réduire la consommation pendant les heures d'activité ou pour augmenter la précision de détection pendant les heures creuses, en jouant par exemple :
- sur la fréquence d'acquisition des images et d'envoi des données binaires ;
- sur la définition des images ou sur le temps d'exposition de module CAM ;
- sur le choix du modèle du réseau de neurones ...

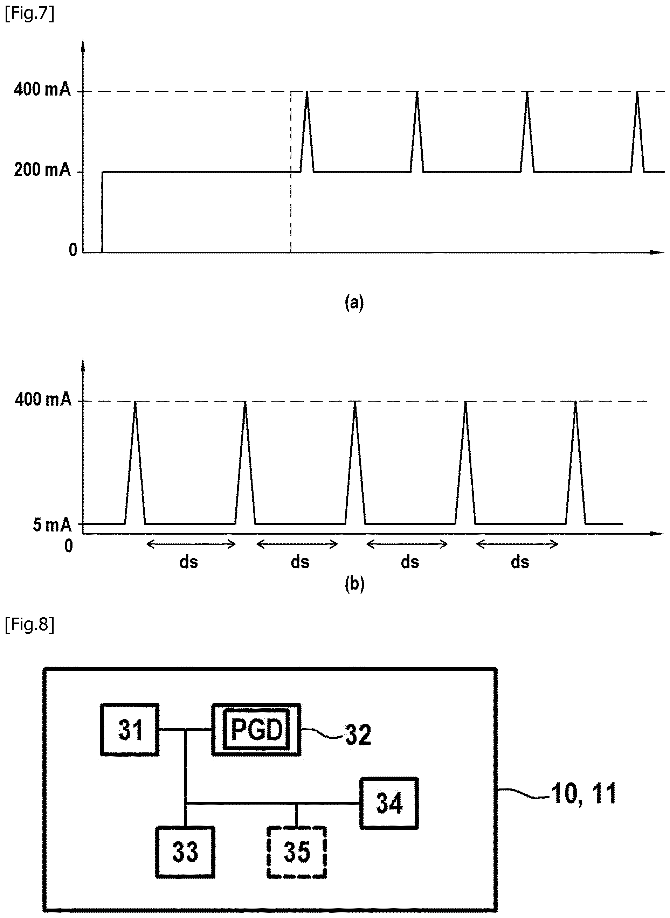

La **figure 7** représente la consommation des dispositifs autonomes 10 et 11 des figures 5 et 6.

Plus précisément :
- le diagramme (a) représente la consommation du dispositif 11, avec système d'exploitation ; et
- le diagramme (b) représente la consommation du dispositif 10, sans système d'exploitation.

Sur le diagramme (a) on voit que le dispositif 11 à une consommation nominale d'environ 200 mA, et une consommation de 400 mA pour l'acquisition, le traitement d'une image (prétraitement éventuel et analyse par le réseau de neurones) et l'envoi des informations binaires.

Dans le mode de réalisation décrit ici, le système d'exploitation est de type Linux. Il met environ entre 30 et 60 secondes (TD sur la figure 6) pour démarrer. Sa consommation nominale est de l'ordre de 100mA, en fonctionnement de l'ordre de 150 mA.

Il apparaît sur le diagramme (b) que la consommation nominale du dispositif 11 est beaucoup plus faible (environ 5 mA).

L'allumage et l'extinction du dispositif autonome 10 sont beaucoup plus rapides en l'absence de système d'exploitation, de l'ordre de la microseconde, durée correspondant au temps d'alimentation du processeur.

La **figure 8** représente l'architecture matérielle d'un dispositif autonome 10, 11 conforme à l'invention.

Dans le mode de réalisation décrit ici, le dispositif autonome 10, 11 comporte un processeur 31, une mémoire morte de type ROM 32, une mémoire vive 33, une mémoire non volatile réinscriptible 34 et, pour le dispositif autonome 11, un système d'exploitation 35.

La configuration du dispositif 11 peut comprendre:
- un processeur 31 à 1GHz, par exemple au sein d'un Raspberry Pi Zéro (marque déposée) et ;
- un système d'exploitation de type Raspbian, Linux (marques déposées).

La configuration du dispositif 10 peut comprendre un processeur 31 à 300MHz, par exemple au sein d'un ESP32 (marque déposée).

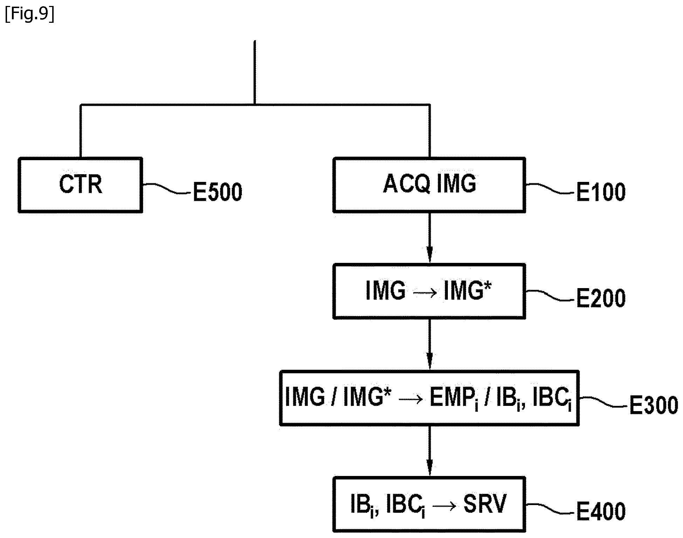

La **figure 9** représente sous forme d'organigramme les principales étapes d'un procédé de détermination conforme à un mode particulier de réalisation de l'invention. Il est mis en œuvre par un dispositif autonome 10, 11 alimenté à partir d'au moins une source d'énergie renouvelable.

Dans le mode de réalisation décrit ici, le procédé de détermination comporte une étape E100 d'acquisition d'au moins une image IMG couvrant une zone géographique ZG comportant au moins un emplacement EMPᵢ.

Cette image peut être ou non prétraitée au cours d'une étape E200. Si c'est le cas le prétraitement optionnel de l'image IMG est déclenché dynamiquement.

Le procédé comporte une étape E300 pour déterminer, en utilisant un réseau de neurones NN, à partir l'image acquise IMG ou prétraitée IMG^{∗}, une information binaire IBi représentative de l'occupation ou de la non occupation dudit au moins un emplacement EMPᵢ.

Le procédé comporte une étape E400 pour envoyer l'information binaire à un serveur distant SRV via un réseau de télécommunications NET.

Le procédé est remarquable en ce qu'il comporte au moins une étape E500 de gestion de l'énergie du dispositif autonome (10, 11), en contrôlant, en fonction d'au moins un premier critère prédéterminé, une opération mise en œuvre au cours de ladite étape E100 d'acquisition, ou dudit prétraitement E200 ou de ladite étape de détermination E300 ou de ladite étape d'envoi E400.

Cette étape E500 peut notamment consister à :
- fixer un paramètre d'un dispositif d'acquisition pour acquérir l'image, par exemple le format de l'image, sa définition, un temps d'acquisition ;
- prétraitée l'image acquise, par exemple pour en modifier le format ou la définition ;
- sélectionner un réseau de neurones pour traiter l"image acquise ou prétraitée ;
- agir sur une inférence du réseau de neurones ;
- agir sur une modalité d'envoi des informations binaires ;
- activer, désactive, mettre en veille certains composants du dispositif.

## Revendications

1. Dispositif (10, 11) autonome de détermination de l'occupation d'au moins un emplacement (EMPᵢ) ayant une forme prédéterminée, le dispositif comportant :
- un module (CAM) d'acquisition d'au moins une image (IMG) couvrant une zone géographique (ZG) comportant ledit au moins un emplacement ;
- un module (MPI) de prétraitement d'image configuré pour, lorsqu'il est mis en œuvre dynamiquement par un contrôleur de gestion d'énergie (CTR1, CTR2) du dispositif autonome (10, 11), obtenir au moins une image prétraitée (IMG^{∗}) à partir de ladite au moins une image (IMG) ;
- au moins un réseau de neurones (NN) configuré pour effectuer un traitement ladite au moins une image (IMG) acquise par le module d'acquisition (CAM) ou ladite image prétraitée (IMG^{∗}), pour déterminer une information binaire (IBᵢ, IBCᵢ), représentative de l'occupation ou de la non occupation dudit au moins un emplacement (EMPi) ; et
- un module (COM) d'envoi de ladite information binaire (IBᵢ, IBCᵢ) à un serveur distant (SRV) via un réseau (NET) de télécommunications ;
ledit dispositif (10, 11) étant **caractérisé en ce qu'**il comporte :
- au moins une batterie (BAT) configurée pour alimenter, ledit au moins un réseau de neurones (NN), lesdits modules d'acquisition, de prétraitement et d'envoi (CAM, MPI COM) et ledit contrôleur de gestion d'énergie (CTR1, CTR2); et
- un module (MRE) de routage d'énergie configuré pour router une énergie électrique obtenue à partir d'au moins une source d'énergie renouvelable (SE) vers :
(i) ledit au moins un réseau de neurones (NN), lesdits modules d'acquisition, de prétraitement et d'envoi (CAM, MPICOM), ledit contrôleur de gestion d'énergie (CTR1, CTR2), ou ;
(ii) vers ladite au moins une batterie (BAT) ;
- ledit contrôleur de gestion d'énergie (CTR1, CTR2) étant configuré pour contrôler au moins une opération (OPₖ) du module d'acquisition d'image (IMG) et/ ou 'au moins une opération du module de prétraitement d'image (MPI) et/ou une opération dudit traitement par réseau de neurones (NN) au moins en fonction d'au moins un critère prédéterminé prenant en compte au moins :
- un niveau de charge (nc) de ladite batterie; ou
- au moins une mesure (qed) d'une quantité d'énergie renouvelable disponible ; ou
- au moins une prédiction (qed^{F}) d'une quantité d'énergie renouvelable disponible pour l'avenir.

2. Dispositif autonome selon la revendication 1 **caractérisé en ce que** ledit au moins un critère prédéterminé peut également prendre en compte :
- une information (d) de date lue dans un calendrier (CAL) ;
- un niveau de luminosité (nlum) ;
- un niveau sonore (nson).

3. Dispositif autonome selon la revendication 1 ou 2 **caractérisé en ce que** ledit contrôleur de gestion d'énergie (CTR1, CTR2) est configuré pour activer, désactiver ou basculer au moins un composant choisi parmi le module d'acquisition (CAM), le module de prétraitement (MPI), le module de communication (COM), ledit au moins un réseau de neurones (NN) et ledit contrôleur de gestion d'énergie (CRT1, CRT2) dans mode veille en fonction dudit au moins un critère prédéterminé.

4. Dispositif autonome selon l'une quelconque des revendications 1 à 3 **caractérisé en ce qu'**il comporte plusieurs réseaux de neurones, chacun desdits réseaux de neurones ayant été entraîné avec des images ayant un format d'images différent, ledit contrôleur de gestion d'énergie étant configuré pour sélectionner dynamiquement, parmi lesdits réseaux de neurones celui à utiliser pour traiter ladite image (IMG, IMG^{∗}).

5. Dispositif autonome selon la revendication 4, **caractérisé en ce que** le contrôleur de gestion d'énergie (CTR1, CTR2) sélectionne le réseau de neurones au moins en fonction dudit critère prédéterminé et de caractéristiques de ladite image acquise (IMG) ou de ladite image prétraitée (IMG^{∗}).

6. Dispositif autonome selon l'une quelconque des revendications 1 à 5 **caractérisé en ce que** ledit contrôleur de gestion d'énergie (CTR1, CTR2) est configuré pour:
- fixer un paramètre de configuration (pc) dudit module d'acquisition d'image (CAM), choisi parmi une fréquence d'acquisition de ladite au moins une image ou une durée d'exposition.

7. Dispositif autonome selon l'une quelconque des revendications 1 à 6, **caractérisé en ce que** ledit contrôleur de gestion d'énergie (CTR1, CTR2) est configuré pour envoyer au module de prétraitement d'image (MPI) une instruction de prétraitement (pt) de ladite image acquise (IMG) pour obtenir ladite image prétraitée (IMG^{∗}).

8. Dispositif autonome (10, 11) selon la revendication 7, **caractérisé en ce que** ledit contrôleur de gestion d'énergie (CTR1, CTR2) est configuré pour contrôler ledit module de prétraitement d'image (MPI) pour qu'il obtienne ladite image prétraitée à partir de ladite image acquise en convertissant un format de ladite image acquise en un autre format correspondant au format des images avec lequel ledit réseau de neurones sélectionné a été entraîné.

9. Dispositif autonome selon l'une quelconque des revendications 1 à 8, **caractérisé en ce que** ledit contrôleur de gestion d'énergie (CTR1, CTR2) est configuré pour fixer un paramètre (pe) dudit module d'envoi, par exemple une fréquence d'envoi (pe) desdites informations binaires en fonction dudit au moins un critère prédéterminé.

10. Dispositif autonome selon l'une quelconque des revendications 1 à 9, **caractérisé en ce que** ledit contrôleur de gestion d'énergie (CTR1, CTR2) est configuré pour envoyer au réseau de neurones effectuant le traitement de ladite image (IMG, IMG^{∗}) une commande (pn) de sorte à ce qu'il choisisse un chemin dans ledit réseau de neurones pour effectuer une inférence lors du traitement de ladite image acquise (IMG) ou prétraitée (IMG^{∗}).

11. Dispositif autonome (10) selon l'une quelconque des revendications 1 à 10 **caractérisé en ce qu'**il ne comporte pas de système d'exploitation.

12. Procédé de détermination de l'occupation d'au moins un emplacement ayant une forme prédéterminée, ledit procédé comportant :
- une étape (E100) d'acquisition d'au moins une image (IMG) couvrant une zone géographique (ZG) comportant ledit au moins un emplacement (EMPi) ;
- une étape (E300) de traitement par un réseau de neurones (NN), de ladite au moins une image acquise (IMG) ou à partir d'une image (IMG^{∗}) obtenue par un prétraitement optionnel de ladite au moins une image (IMG) déclenché dynamiquement, pour déterminer une information binaire (IBi) représentative de l'occupation ou de la non occupation dudit au moins un emplacement (EMPi); et
- une étape (E400) d'envoi de ladite information binaire à un serveur distant (SRV) via un réseau de télécommunications (NET) ;
ledit procédé étant **caractérisé en ce qu'**est mis en œuvre par un dispositif autonome (10, 11) alimenté à partir d'au moins une source d'énergie renouvelable (SE) ; et **en ce qu'**il comporte :
- au moins une étape (E500) de gestion de l'énergie du dispositif autonome (10, 11), en contrôlant, en fonction d'au moins un critère prédéterminé, une opération mise en œuvre au cours de ladite étape (E100) d'acquisition, ou dudit prétraitement (E200) ou de ladite détermination (E300) de l'information binaire,
ledit au moins un critère prédéterminé prenant en compte au moins :
- un niveau de charge (nc) de ladite batterie; ou
- au moins une mesure (qed) d'une quantité d'énergie renouvelable disponible ; ou
- au moins une prédiction (qed^{F}) d'une quantité d'énergie renouvelable disponible pour l'avenir.

13. Dispositif autonome (10) comportant un processeur (PROC) configuré pour mettre en œuvre le procédé selon la revendication 12, dans lequel la fréquence dudit processeur est comprise entre 200 MHz et 1Ghz.

14. Equipement urbain (EQU) comportant un dispositif autonome selon l'une quelconque des revendications 1 à 12 ou 13, ledit équipement urbain étant par exemple un lampadaire, un panneau publicitaire, un balcon, ou un abri.

15. Programme d'ordinateur (PROG) comportant des instructions pour l'exécution des étapes d'un procédé de détermination selon la revendication 12 lorsque ledit programme est exécuté par un ordinateur.
